# EUROPEAN PATENT APPLICATION

(11) **EP 0 580 066 A2**
(43) Date of publication of application: **26.01.1994**
(21) Application number: 93111261.9
(22) Date of filing: 14.07.1993
(51) Int. Cl.: G11B 7/085, G11B 7/00, G11B 7/12, G11B 7/08

(54) **Write/read device of optical information**

(30) Priority: 16.07.1992 JP 189204/92
(71) Applicant: MATSUSHITA ELECTRIC INDUSTRIAL CO., LTD., Kadoma-shi, Osaka-fu, 571 (JP)
(72) Inventor: Satoh, Isao, Neyagawa-shi, Osaka, 572 (JP); Takagi, Yuji, Hirakata-shi, Osaka, 573 (JP); Hisakado, Yuji, Neyagawa-shi, Osaka, 572 (JP)
(74) Representative: Eisenführ, Speiser & Partner

(57) **Abstract**

A write/read device comprises an optical head 4A for a single-sided optical disk, an optical head 4B for a double-sided optical disk, a sensor 23 for deciding if a record medium is a single-sided or double-sided optical disk, and a multiplexer 15 for selecting either of the optical head 4A or 4B according to the decision for writing or reading information. Thus, the write and read device can write or read optical information for both single-sided and double-sided optical disks.

## Description

### BACKGROUND OF THE INVENTION

### Field of the Invention

The present invention relates to a write/read device for writing or reading information in a record medium such as an optical disk.

### Description of the Prior Art

Recently, an optical disk has attracted attention as a high density removable storage medium, and international standards thereof have been proposed. The international standard IS10090 for the standards on 90 mm rewritable optical disk cartridge was prepared by the International Standard Organization. An object of the standard is an optical disk of 86 mm of diameter and 1.2 mm of thickness of polycarbonate substrate and an magneto-optic record layer is formed on a side of the substrate. The memory capacity of the disk is 128 MB.

The optical disk has a single-sided structure in order to make it possible to overwrite with magnetic modulation and to provide a thin cartridge for easy handling and further to make the drive compact. Because of the single-sided structure, the memory capacity per disk is smaller than that of a double-sided optical disk of 5.25 inches. If a double-sided structure is adopted for enhancing the memory capacity, the thickness of a double-sided optical disk becomes double that of the above-mentioned disk, and the thickness of a cartridge for holding a disk also increases. Therefore, the optical disk cannot be loaded in a drive for optical disks of the standard.

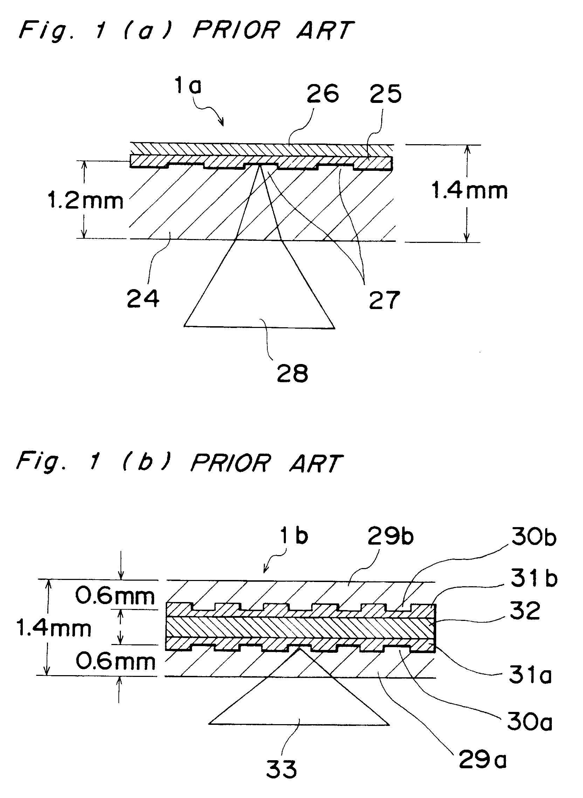

Then, a double-sided optical disk is proposed to have 0.6 mm of thickness which is a half of that of the above-mentioned optical disk. Then, a cartridge of the same thickness as that for the previous optical disk can be used, and a double-sided optical disk can be realized without increasing the size of the drive. Fig. 1(a) is a sectional view for illustrating the structure of a single-sided optical disk having 1.2 mm of substrate thickness, while Fig. 1(b) is a sectional view for illustrating the structure of a double-sided optical disk having 0.6 mm of substrate thickness.

A single-sided optical disk 1a shown in Fig. 1(a) comprises a transparent substrate 24 of 1.2 mm of thickness with preformatted track sectors, tracks 27 formed on a surface of the substrate 24, a record layer 25 formed on the tracks 27 and a protection layer 26 for protecting the record layer 25 from air environment, and the thickness thereof is at most 1.4 mm. A laser beam 28 for writing and reading information irradiates the optical disk from the side of the substrate 24. On the other hand, an optical disk 1b shown in Fig. 1(b) comprises two transparent substrates 29a, 29b of 0.6 mm thickness with preformatted track sectors, tracks 30a, 30b formed on the opposite surfaces of the substrate 29a, 29b, record layers 31a, 31b formed on the tracks 30a, 30b and a adhesion layer 32 for adhering the record layers 31a and 31b. The thickness of the double-sided optical disk is 1.4 mm is the same as that of the above-mentioned single-sided optical disk. A laser beam 33 for writing and reading information irradiates the optical disk from the side of the substrate 29a or 29b. Especially, a phase-change type material is the most appropriate for the record layers 31a and 31b for erasing information only with use of the irradiation of laser beam.

However, the double-sided optical disk 1b has a thickness of the substrates 29a, 29b different by 0.6 mm from that of the single-sided optical disk 1a with use of a substrate of 1.2 mm thickness. Therefore, if the laser beam which transmits the substrate is focused with an object lens which is designed for either 1.2 or 0.6 mm of the substrate thickness, a large spherical aberration happens on the surface of the optical disk which cannot be adjusted by the object lens and a good converged optical beam cannot be available. Therefore, information cannot be written or read for the two optical disks with different thicknesses.

### SUMMARY OF THE INVENTION

An object of the present invention intends to provide a write/read device of optical information which can write and read information for both single-sided and double-sided optical disks.

A write/read device of the present invention comprises two optical head means: first and second optical head means for writing and reading information in a record medium supported by a drive mechanism. The first optical head means can write and read information for a first record medium comprising a first record layer and a first transparent substrate applied thereto, while the second optical head means can write and read information for a second record medium comprising a second record layer and a second transparent substrate applied thereto. The thickness of optical transmission from the surface of the first transparent substrate to the first record layer in a first record medium is smaller than the first thickness. A decision means decides a record medium as an object of write/read to be the first record medium or the second record medium, and a selection means selects the first or second optical head means for reading or writing information on the record medium supported by the drive mechanism according to the decision of the decision means.

An advantage of the present invention is that information can be written or read for single-side and double-side optical disks.

### BRIEF DESCRIPTION OF THE DRAWINGS

These and other objects and features of the present invention will become clear from the following description taken in conjunction with the preferred embodiments thereof with reference to the accompanying drawings, and in which:
Fig. 1(a) is a sectional view of a single-sided optical disk, and Fig. 1(b) is a sectional view of a double-sided optical disk; and
Fig. 2 is diagram of a structure of a write and read device of optical information of an embodiment of the present invention.

### DETAILED DESCRIPTION OF THE PREFERRED EMBODIMENTS

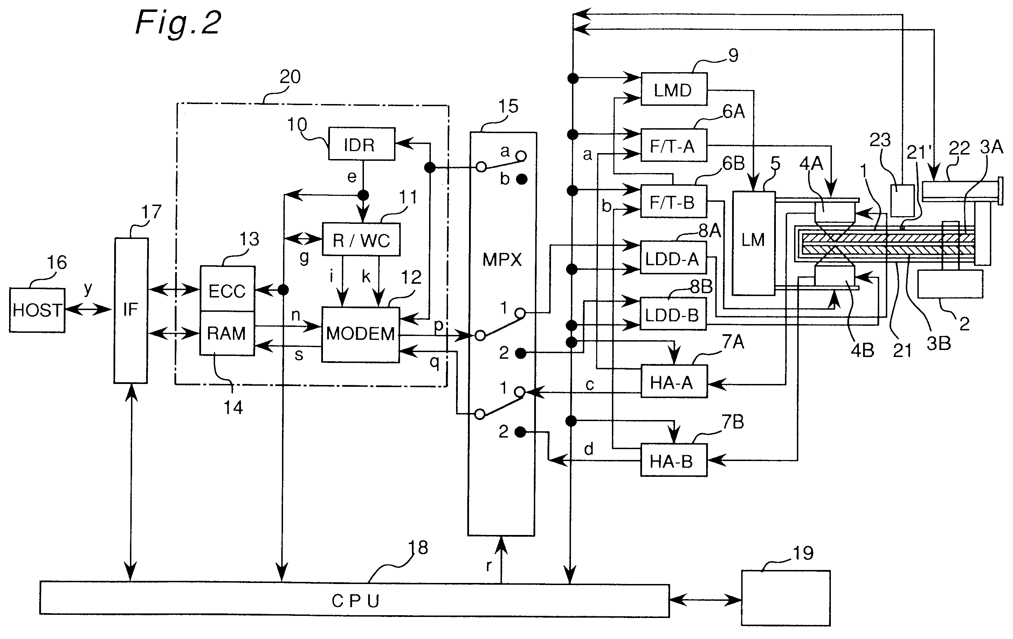

Referring now to the drawings, an embodiment of the present invention will be explained below. Fig. 2 shows a structure of an embodiment of a write/read device of optical information according to the present invention. In Fig. 2, an optical disk 1 is held in a cartridge 21, and a loading mechanism 22 fixes and removes the cartridge 21 to the rotation axis of the motor 2. The optical disk 1 is driven by a motor 2. Though a double-sided optical disk is shown in Fig. 2, a single-sided optical disk may also be used. The reference numerals 3A and 3B denote the A side and B side of record of the optical disk 1 for a double-sided disk shown in Fig. 2. However, only the A side 3A is provided for a single-sided disk not shown. Marks such as sensor holes 21' are provided on a surface of the cartridge 21 at prescribed positions for recognizing the data on the optical disk 1 such as a single-sided or double-sided optical disk, A-side 3A or B-side 3B and the substrate thickness, and a sensor 23 is arranged to detect the sensor holes 21'. Laser driver circuits (LDD-A, LDD-B) 8A, 8B drive laser diodes of optical heads 4A, 4B. The first optical head 4A converges and irradiates a laser beam through the transparent substrate of 1.2 mm thickness onto the record layer, while the second optical head 4B converges and irradiates a laser beam through the transparent substrate of 0.6 mm thickness onto the record layer. The first and second optical heads 4A and 4B are arranged oppositely with each other with respect to the optical disk 1. A linear motor (LM) 5 moves the optical head 4A, 4B to seek a target track. A focusing and tracking control circuit (F/T-A) 6A performs the focusing and tracking control of the beam of the optical head 4A and for the retrace of spiral track, while another focusing and tracking control circuit (F/T-B) 6B performs the focusing and tracking control of the beam of the optical head 4B and for the retrace of spiral track. Head amplifiers (HA-A, HA-B) 7A and 7B amplifies servo error signals "a", "b" and read signals "c", "d" of the optical heads 4A, 4B for binarizing the amplified signal. A linear motor controller (LMD) 9 seeks the optical head 4A, 4B to the target track with the linear motor 5.

A data write/read circuit 20 comprises the blocks of a sector ID read circuit 10, a sector write/read controller 11, a MODEM 12, an error correction circuit 13 and a buffer memory 14. The sector ID read circuit 10 reads a track sector address "e", "f" from the sector ID of the optical head 4A, 4B. The sector write/read controller (W/RC) 11 compares the sector address "e" and data with the object sector address "g" to be written/read to generate a write gate signal "i" or a read gate signal "k". The MODEM (data modulation/demodulation circuit) 12 modulates a coded data "n" with a 2-7 RLLC (run length limited code) or the like to send a modulation signal "p" and demodulates a read signal "c" to send a demodulation signal "s". The error correction circuit (ECC) 13 generates a coded data "n" or a write data with error correction codes and it verifies and corrects errors of a demodulation data "s". The buffer memory (RAM) 14 stores temporary data. A multiplexer (MPX) 15 provides the modulation signal "p" from the MODEM 12 to the laser driver 8A or 8B according to a switch signal "r" from the CPU 18 and for connecting the read signal "c" or "d" from the head amplifier 8A or 8B to the MODEM 12 according to a switch signal "r". An interface (IF) 17 connects a host computer 16 with a SCSI (small computer system interface) bus "y". The microcomputer (CPU) 18 controls the whole write/read device with use of a memory 19.

The operation of the above-explained write/read device of optical information for writing and reading information in an optical disk will be explained below. First, if an optical disk 1 is loaded to the motor 2, the CPU 18 detects the sensor holes 21' provided in the disk cartridge 21 with the sensor 23 and decides data such as the single-sided or double-sided optical disk, the A-side or B-side and the substrate thickness of the optical disk 1.

In case of a single-sided optical disk, the effective record side A and the substrate thickness are decided from the sensor holes 21' and the optical head 4A for the effective record side A is selected. If the substrate thickness of the effective record side A is 1.2 mm, the data is written or read with the optical head 4A. If write or read for the record side opposite to the optical head 4B is performed, the CPU 18 makes the loading mechanism 22 drive to discharge the cartridge 21 because the write or read is used for a double-sided optical disk.

In case of a double-sided optical disk, the record side opposite to the optical head 4A or 4B and the substrate thickness thereof are decided from the sensor holes 21'. Then, the optical head 4B opposite to the effective record side B is selected. If write or read for the record side opposite to the optical head 4A is performed, the CPU 18 makes the loading mechanism 22 drive to discharge the cartridge 21 because the write or read is used for a single-sided optical disk.

When the kind of an optical disk is distinguished and an optical head for the distinguished optical disk is selected, the optical head 4A is selected if the substrate of the record side 3A has 1.2 mm thickness while the optical head 4B is selected if the substrate of the record side 3B has 0.6 mm thickness. When write or read of data is performed on a record side opposite to the selected optical head, the spiral direction of the track is decided from the record side and the optical head opposite to the record side, and the CPU 18 sets the rotation direction of the motor 2 for the linear motor driver 9 to rotate the optical disk 1 in the predetermined direction and makes the focusing and tracking controller 6A, 6B to perform the focusing and tracking control. The CPU 18 seeks the target track sector with the optical head 4A, 4B and makes the data multiplexer 15 set the path of the signal "p", "q" according to the optical head 4A, 4B used for write/read.

The write operation of the above-mentioned embodiment will be explained below. When the host computer 16 sends a write command to the SCSI bus "y", the CPU 18 interprets the write command received by the interface 17 and sends a command to the linear motor driver 9 for seeking the optical head 4A, 4B to the target track so as to drive the linear motor 5. The record data from the host computer 16 are stored once in the RAM 14, and the error correction circuit 13 sends a coded data "n" which has an error correction code added to the record data. The CPU 18 sets a write sector address and a write command in the sector write/read controller 11. If the sector write/read controller 11 detects the prescribed sector, a write gate signal "i" is added to the MODEM 12 and a modulation signal "p" obtained by modulating the coded data "n" with 2-7 RLLC modulation is added to the laser driver 8A (8B).

In case of single-sided optical disk, the optical head 4A writes a modulation signal "p" in sectors of the record side of a substrate of 1.2 mm thickness, while in case of double-sided optical disk, the optical head 4B writes a modulation signal "p" in sectors of the record side of a substrate of 0.6 mm thickness. The above-mentioned write operation is repeated for sectors of a predetermined number. The multiplexer 15 switches the modulation signal "P" to the laser driver 8A for the optical head 4A for 1.2 mm thickness or to the laser driver 8B for the optical head 4B for 0.6 mm thickness according to the switch signal "r" sent by the CPU 18.

The read operation of the above-mentioned embodiment will be explained next. When the host computer 16 sends a read command to the SCSI bus "y", the CPU 18 interprets the read command received by the interface 17 and sends a command to the linear motor driver 9 for seeking the optical head 4A, 4B to the target track so as to drive the linear motor 5. The CPU 18 sets a read sector address and a read command in the sector write/read controller 11. If the sector write/read controller 11 detects the prescribed sector, a read gate signal "k" is added to the MODEM 12.

The CPU 18 makes the multiplexer 15 select the input signals, or the read data "c" of the record side for 1.2 mm thickness from the optical head 4A and those "d" of the record side of 0.6 mm thickness from the optical head 4B, according to a switch signal "r" to send it to the sector ID read circuit 10 and the MODEM 12. The signal "q" of the multiplexer 15 is demodulated in the MODEM 12 and the demodulation data "s" is stored in the RAM 14. The error correction circuit 13 corrects the errors in the demodulation data "s" stored in the RAM 14 and the corrected data is stored again in the RAM 14. The read data after the error correction is sent via the interface 17 to the host computer 16. The above-mentioned read operation is repeated for sectors of a predetermined number.

As explained above, two optical heads 4A and 4B with object lenses for 1.2 mm thickness and 0.6 mm thickness are provided in the present invention. In the read/write device, the substrate thickness from the sensor holes provided in a cartridge is detected when the cartridge is inserted and the modulation output "p" of the data write/read circuit 12 or the read data "q" from the optical head is selected by the multiplexer 15. Thus, the write/read device can write/read two kinds of optical disks of different thicknesses.

In contrast to the above-mentioned example, the first and second optical head may be arranged at the same side with respect to the record medium.

In the above-mentioned embodiment, the record medium written or read by the first optical head 4A is a single-sided optical disk while the record medium written or read by he second optical head 4B is a double-sided optical disk. However, the present invention can be applied if optical disks having different transmission lengths from the surface of the transparent substrate to the record layer are used at the same time irrespective of single-sided or double-sided optical disk.

In the above-mentioned embodiment, the optical transmission length (substrate thickness) of the first record medium (single-sided optical disk) is set to be about double that of the second record medium (double-sided optical disk). however, the substrate thickness is not limited the examples mentioned above.

Further, in the above-mentioned embodiment, the record medium is an optical disk. However, the present invention can be applied to any record medium which can write/read information with an optical beam or with an magneto-optical interaction.

In the above-mentioned embodiment, sensor holes 21' provided in a cartridge 21 are used to deciding data such as the first or second record medium. However, the data may also be decided by using for example the intensity of the light detected with the optical head 4A as a first optical head means or with the optical head 4B as a second optical head means. Still further, recognition marks for distinguishing the transmission length from the surface of a substrate to a record layer can be provided in a substrate or in a record layer of an optical disk instead of the sensor marks.

In the above-mentioned embodiment, the computer 18a is used to select an optical head. However, it may be made of a hard-wired logic.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A write/read device comprising:
a drive mechanism for supporting a record medium;
a first optical head means for writing and reading information in a record medium supported by the drive mechanism, which first optical head means being able to write and read information for a first record medium comprising a first record layer and a first transparent substrate applied thereto, which first record medium having a first thickness of optical transmission from the surface of the first transparent substrate to the first record layer;
a second optical head means for writing and reading information in a record medium supported by the drive mechanism, which second optical head means being able to write and read information for a second record medium comprising a second record layer and a second transparent substrate applied thereto, which second record medium having a second thickness of optical transmission from the surface of the second transparent substrate to the record layer; which second thickness being smaller than the first thickness;
a decision means for deciding a record medium supported by said scan mechanism as an object of write or read to be the first record medium or the second record medium; and
a selection means for selecting said first or second optical head means for reading or writing information on the record medium supported by said drive mechanism according to the decision of said decision means.

2. The write/read device according to Claim 1, wherein said first and second optical head means are arranged oppositely with each other while interposing the record medium.

3. The write/read device according to Claim 1, wherein said first and second optical head means are arranged at the same side with respect to the record medium supported by said drive mechanism.

4. The write/read device according to Claim 1, wherein said decision means comprises a recognition means provided in a record medium and a sensor for detecting the recognition means.

5. The write/read device according to Claim 4, wherein said recognition means comprises one or more marks provided in a cartridge which contains a record medium.

6. The write/read device according to Claim 1, wherein said decision means decides the record medium by using the optical properties read with said first or second optical head.

7. The write/read device according to Claim 1, wherein said first record medium is a single-sided record medium and said second record medium is a double-sided record medium.

8. The write/read device according to Claim 1, wherein said first thickness is 1.2 mm and said second thickness is 0.6 mm.
